# EUROPÄISCHE PATENTSCHRIFT

(11) **EP 1 599 664 B1**
(45) Veröffentlichungstag und Bekanntmachung des Hinweises auf die Patenterteilung: **23.04.2008**
(21) Anmeldenummer: 04713473.9
(22) Anmeldetag: 21.02.2004
(51) Int. Cl.: F02D 41/38, F02D 41/40, F02D 23/02

(54) **VERFAHREN ZUR OPTIMIERUNG DES ARBEITS- UND BRENNVERFAHREN EINES DIESELMOTORS**
METHOD FOR OPTIMIZING THE OPERATING MODE AND COMBUSTION MODE OF A DIESEL ENGINE
PROCEDE D'OPTIMISATION DU PROCESSUS DE FONCTIONNEMENT ET DE COMBUSTION D'UN MOTEUR DIESEL

(30) Priorität: 28.02.2003 DE 10308789
(43) Veröffentlichungstag der Anmeldung: 30.11.2005
(73) Patentinhaber: MAN B & W Diesel AG, 86224 Augsburg (DE)
(72) Erfinder: HAAS, Stephan, 82291 Mammendorf (DE); HEIDER, Günter, 86845 Grossaitingen (DE); GRÜNAUG, Peter, 86316 Friedberg (DE)
(74) Vertreter: Grünberger, Christian Thomas
(86) Internationale Anmeldenummer: PCT/EP2004/001722
(87) Internationale Veröffentlichungsnummer: WO 2004/076840

(56) Entgegenhaltungen:
- EP-A- 1 001 153
- EP-A- 1 211 404
- DE-A- 19 747 231
- DE-A- 19 836 053
- US-B1- 6 343 585

## Beschreibung

Die Erfindung betrifft ein Verfahren zur Optimierung des Arbeits- und Brennverfahren eines Dieselmotors im Hinblick auf minimale Schadstoffemission mit Common-Rail-Einspritzung nach dem Oberbegriff des Anspruchs 1.

Vor dem Hintergrund der zunehmend strenger werdenden Emissionsgrenzwerte (TA Luft) insbesondere für stationäre Anlagen, Kraftwerke, Pumpstationen und Verdichteranlagen rückt die Absenkung der Schadstoffwerte für Stickoxide immer mehr in den Vordergrund der Motorenentwicklung.

So ist beispielsweise aus der DE 198 36 053 A1 eine Einrichtung zur Steuerung/Regelung der Kraftstoffeinspritzung bekannt, die ein Common-Rail-Einspritzsystem umfasst und der Einspritzvorgang derart hinsichtlich einer minimalen Schadstoffemission optimiert wird, dass er in eine Voreinspritzung, eine Haupteinspritzung sowie in eine Nacheinspritzung aufgeteilt wird. Insbesondere die Nacheinspritzung ermöglicht dabei eine deutliche Abgasverbesserung. Diese wird mittels Injektoren nach der Verbrennung der Haupteinspritzung zugemessen und im wesentlichen mit dem Abgas ausgestossen und reagiert in einem zusätzlichen Katalysator zusammen mit dem Stickoxid zu unschädlichen Bestandteilen.

Bekanntlich wird bei elektronisch geregelten Einspritzsystemen für Dieselmotoren, wie z.B. bei dem Common-Rail-Einspritzsystem, die in allen Motorbetriebspunkten einen frei wählbaren Einspritzdruck bereitstellen können, die Brennstoffeinspritzung mittels eines Magnet- oder Piezoventils gesteuert. Die Bestromung des Magnetventils übernimmt eine elektronische Reglereinheit, oft als ECU (Engine Control Unit) bezeichnet, derart dass der Einspritzbeginn, die Einspritzdauer und die Menge der Einspritzung in Abhängigkeit von den Betriebsparametern des Motors aus einem in der ECU abgelegten Kennfeld, das beispielsweise mittels eines Optimierungsverfahrens ermittelt wurde, hergeleitet werden können.

Somit wurden also bereits im Stand der Technik Strategien der Einpritzverlaufsformung, wie sie für Speichereinspritzsysteme möglich sind, nämlich Einspritzdruck und Bestromungsbeginn für jeden Punkt im Drehzahl-Last-Kennfeld, wie beispielhaft in der DE 197 47 231 A1 oder in der EP 1 001 153 A1 beschrieben, anzupassen, als geeignete Maßnahme zur Optimierung betrachtet.

Bei Einbeziehung eines Abgasturboladers in das Arbeits- und Brennverfahren des Dieselmotors stehen auf der Luftseite des dieselmotorischen Prozesses als zielführende Maßnahme zur NOx-Reduktion insbesondere die Abgasrückführung im Vordergrund. Auf der Kraftstoffseite gilt wie oben geschildert die Common-Rail-Einspritzung als wirkungsvolle Optimierungsmaßnahme. Dies ist insbesondere aufgrund der Flexibilität in der Bereitstellung der jeweils geeigneten Einspritzrate und Mischungsintensität prinzipiell unabhängig von Drehzahl und Motorlast möglich.

Neben dem Ziel, die NOx-Emission zu senken, besteht bei Dieselmotoren mit Abgasturboaufladung auch das Bedürfnis, die Erhöhung des Ladeluftdrucks zur luftseitigen NOx-Reduktion innermotorisch herbeizuführen. Hierzu geben die bekannten Verfahren keine Ansatzpunkte.

Unter Nacheinpritzung wird im Stand der Technik eine Haupteinspritzung, welche ca. 90% der einzuspritzenden Menge in sich vereinigt, gefolgt von einer kleineren, nachfolgenden Einspritzung (die im Stand der Technik in der ausklingenden Verbrennung erfolgen soll) verstanden. Damit kann man unter Festhaltung aller anderen Werte die Emission eines Schadstoffes (NOx oder Russ) oder den Brennstoffverbrauch mindern. Der Abstand zwischen Haupt- und Nacheinspritzung kann innerhalb gewisser Grenzen variiert werden. Ist der Abstand jedoch zu kurz, sind keine reproduzierbaren Resultate mehr möglich. Ist der Abstand allerdings zu lang, verschlechtern sich insbesondere die Russwerte wieder, da diese spät eingebrachte Menge selbst wieder Russ bildet. Gute Resultate eröffnet im Versuch insbesondere bei einem aufgeladenen Dieselmotor die Verwendung von einer kleinen (>10% der Haupteinspritzmenge), direkt nachgelagerten (ca. 5 bis 15 °KW nach Ende der Haupteinspritzung) Einspritzung im oberen Lastbereich.

Bisher wird also Mehrfacheinspritzung (insbesondere die Nacheinspritzung) angewandt, um innermotorisch Schadstoffemissionen zu reduzieren. Im übrigen ist bekannt, dass auch eine abgesetzte Voreinspritzung zu einer Verbesserung der Schadstoffemissionen, insbesondere NOx-Emissionen, führen kann.

Hiervon ausgehend war es die Aufgabe vorliegender Erfindung, ein Verfahren zur Optimierung des Arbeits- und Brennverfahren eines Dieselmotors im Hinblick auf minimale Schadstoffemission mit Common-Rail-Einspritzung und unter Einbeziehung eines Abgasturboladers dahingehend weiterzubilden, dass ebenfalls die Enthalpie des Abgases innermotorisch über eine Einspritzverlaufsformung kurzfristig erhöht werden kann, so dass sich die abgegebene Leistung an der Abgasturbine und durch die mechanische Kopplung von Turbine und Verdichter der Luftmassendurchsatz und der Ladeluftdruck verdichterseitig in erwünschter Weise erhöht.

Dies ist besonders dann wünschenswert, wenn z.B. eine Lastaufschaltung erfolgt und die Russemissionen infolge Luftmangel ansteigen.

Diese Aufgabe wird durch die kennzeichnenden Merkmale nach Anspruch 1, die unter dem Begriff "Boost-Injection" zusammengefasst werden können, gelöst, d.h. durch Einspritzen von Kraftstoff in den Motorbrennraum unter den in Anspruch 1 genannten Randbedingungen nach der für den Lastpunkt erforderlichen, bereits erfolgten Haupteinspritzung.

In besonders vorteilhafter Weise können durch die erfindungsgemässe "Boost-Injection" Zusatzeinrichtungen für dynamischen Motorbetrieb, wie z.B. "Jet Assist", d.h. ein zusätzliches Aggregat zur Beschleunigung eines Abgasturboladers (Lufteinblasung bei Lastaufschaltung), einfach ersetzt werden, indem eben erfindungsgemäss eine Erhöhung des Ladeluftdruckes und des Verdichtermassenstroms zukünftig innermotorisch erzielt wird.

Ausserdem ist es auch vorteilhaft, "Boost-Injection" an solchen Lastpunkten im Motorkennfeld einzusetzen, wo erfahrungsgemäss Abgasturbolader und Dieselmotor nicht optimal aufeinander abgestimmt sind und der Kraftstoffverbrauch eine untergeordnete Rolle spielt. In diesem Lastbereichen kann durch "Boost-Injection" ein solches Defizit ausgeglichen werden.

Im folgenden soll anhand der Zeichnung die Erfindung verdeutlicht werden. Es zeigen:
- Fig. 1: eine schematische Darstellung des zu verwendenden Kraftstoffzumeßsystems,
- Fig. 2: eine grafische Darstellung der kurbelwinkelabhängigen Nacheinspritzung.

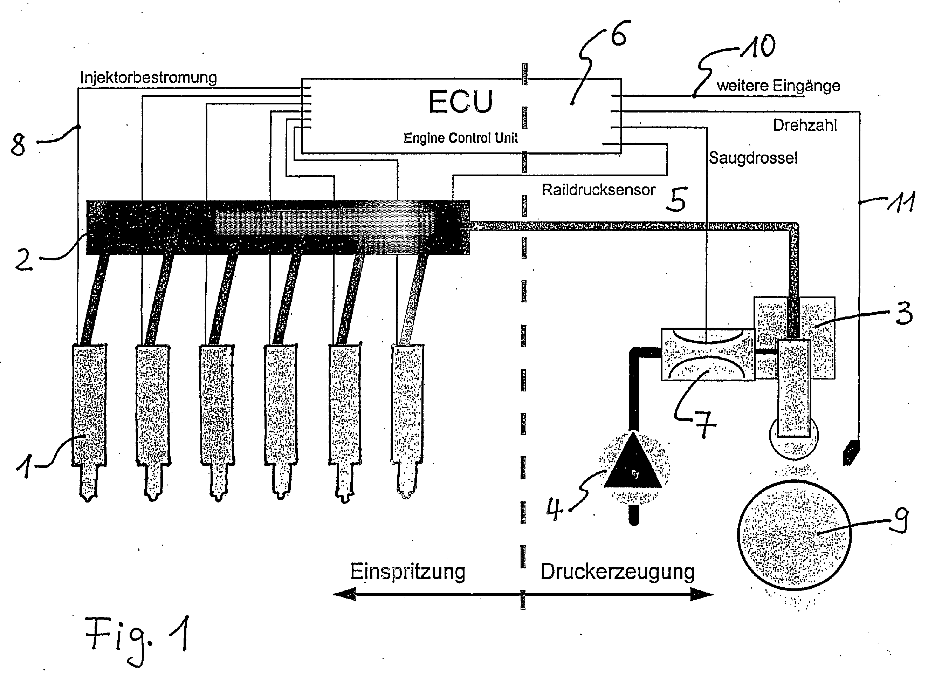

Beispielsweise bei einer hier nicht dargestellten mehrzylindrigen Dieselbrennkraftmaschine mit Turboaufladung wird die Kraftstoffzumessung mittels eines elektronischen Ventils bzw. mittels eines Magnetventils gesteuert. Das in Fig. 1 dargestellte Common-Rail-Einspritzsystem zeigt, dass jedem Zylinder (also eines sechszylindrigen Motors) der Brennkraftmaschine ein Injektor 1 zugeordent ist. Die Injektoren 1 messen abhängig von der Ansteuerung 8 der Magnetventile der Brennkraftmaschine Kraftstoff zu. Die Injektoren 1 sind in bekannter Weise hydraulisch mit einem Kraftstoffhochdruckspeicher 2 verbunden, der von einer Hochdruckpumpe 3 (hier mittels einer Nockenwelle 9 gesteuert) aus einem Kraftstoffvorratsbehälter 4 mit Kraftstoff versorgt wird. Dem Kraftstoffhochdruckspeicher 2 wird dabei durch die Hochdruckpumpe 3 möglichst nur die Kraftstoffmenge zugeführt, die dann auch von den Injektoren 1 entnommen wird.

Dazu kann die Fördermenge der Hochdruckpumpe 3 in Abhängigkeit des Drucks im Kraftstoffhochdruckspeicher 2 gesteuert werden. Zur Erfassung des Drucks ist ein Drucksensor 5 vorgesehen, dessen Ausgangswerte einer Steuereinheit (ECU) 6 zugeführt werden. Diese wertet das Drucksensorsignal aus, bringt es in Relation zu einem vorgegebenen Sollwert, der in einem Kennfeld abgespeichert ist, und steuert entsprechend der Abweichung vom Sollwert die Hochdruckfördermenge der Hochdruckpumpe. Dazu kann z.B. Einfluss auf ein Drosselorgan 7 in der Zuleitung der Hochdruckpumpe 3 genommen werden.

Zugleich dient das Kennfeld der Speicherung der Betriebsparameter der Brennkraftmaschine, die für die Bestimmung der Kraftstoffeinspritzmenge und des Kraftstoffeinspritzzeitpunktes maßgeblich sind. Im wesentlichen wird der Einspritzzeitpunkt auf einen optimierten Wert gehalten, der im Kennfeld abgelegt ist. In diesem Kennfeld sind weiterhin lastabhängig, d.h. in Abhängigkeit von der Haupteinspritzmenge, vom Ladeluftdruck oder der Turboladerdrehzahl (siehe weitere Eingänge 10, 11 der ECU), die Einspritzmenge und der Einspritzbeginn einer Nacheinspritzung, d.h. der "Boost-injection" festgelegt.

Durch Bestromen 8 der Spulen der Magnetventile werden die entsprechenden Injektoren 1 angesteuert. Die Ansteuersignale für die Spulen legen dabei den Einspritzbeginn und das Einspritzende des Kraftstoffs durch die Injektoren fest, wobei jeweils beide Einspritzmengen, die der Haupteinspritzung und die der "Boost-injection" in den jeweiligen Brennraum eines der Zylinder über denselben elektrisch gesteuerten Injektor 1 zugemessen werden.

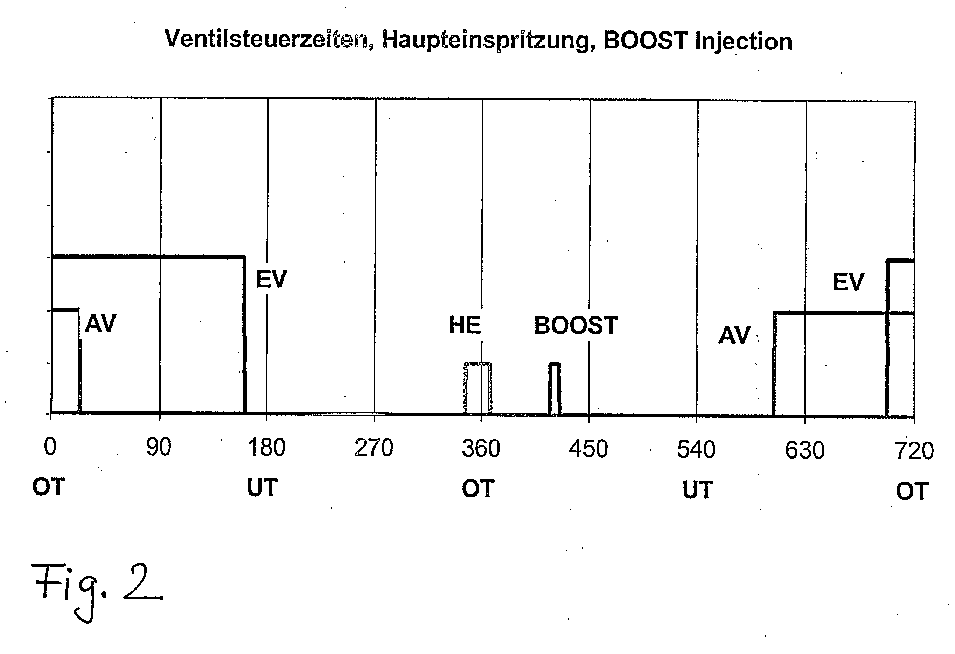

In Fig. 2 sind verschiedene Grössen wie Ein- und Auslassventilsterzeiten, Haupteinspritzung HE und die "Boost-injection" BOOST über der Winkelstellung der Kurbelwelle des Motors (°KW) aufgetragen. Mit OT sind die oberen Totpunkte eines Zylinders bezeichnet. Die einzelnen oberen Totpunkte OT eines Zylinders besitzen einen Abstand von 360 °KW. Weiterhin sind die Zeiträume, in denen die Haupteinspritzung HE und eine Nacheinspritzung BOOST in einen einzelnen Zylinder erfolgen, sowie die Auslassventilöffnungszeiten AV und die Einlassventilöffnungszeiten EV gekennzeichnet.

Die Haupteinspritzung HE des aufgeladenen Dieselmotors in einen der Zylinder erfolgt im Bereich des oberen Totpunkts OT bei 360 °KW. Die HE beginnt etwa 20 °KW vor dem OT und hat eine Dauer von etwa 30 bis 40 °KW, endet also 10 bis 20 °KW nach dem OT.

Um eine gute Wirkung der Nacheinspritzung BOOST auch auf die Abgasemissionen erzielen zu können, sollte die "Boost-injection" in einem bestimmten Zeitabschnitt erfolgen, dem eine Winkelstellung der Kurbelwelle (°KW) zugeordnet werden kann (siehe Fig. 2).

Im Gegensatz zu der bereits bekannten hlacheinspritzung, wo eine gewisse Menge (ca. 10% der Haupteinspritzmenge) kurz nach (ca. 5 bis 15 °KW nach der Haupteinspritzung) der Haupteinspritzung eingespritzt wird, wird bei "Boost-injection" sehr viel später der Kraftstoff eingespritzt, und zwar zwischen 30 und 180 °KW, vorzugsweise bei ca. 50 °KW nach Ende der Haupteinspritzung, also im gezeigten Beispiel etwa bei 400 bis 550 °KW, vorzugsweise bei etwa 420 °KW. Ausserdem wird bei "Boost Injection" eine wesentlich grössere Menge von ca. 20 bis 30% der Haupteinspritzmenge eingespritzt, wobei die erforderliche Menge in der Regel die Einspritzdauer oder umgekehrt festlegt.

Je weiter weg die "Boost-injection" BOOST von der Haupteinspritzung HE liegt, je grösser fällt die Einspritzmenge (zwischen 20 und 30% der HE-Menge) aus und umso mehr der eingespritzten Menge wird in Wärmemenge und somit in mechanische Leistung umgewandelt, wobei diesem Zusammenhang die Forderung nach NOx- und Russreduzierung Grenzen setzt. Je kleiner die Menge der Einspritzung ausfällt um so näher kann an die HE zeitlich gerückt werden.

Für dynamische Lastaufschaltung, wie z.B. bei Off-Shore-Schiffen, die insbesondere eine GPS-gesteuerte Positionseinhaltung bei Sturm aufweisen, wird entsprechend dem Kennfeld "Boost-injection" zur Vermeidung von Russemissionen durch die ECU eingeleitet.

In der ECU ist also ein Kennfeld gespeichert, in dem, wie bereits oben beschrieben, lastabhängig, d.h. in Abhängigkeit von Haupteinspritzmenge, Ladeluftdruck oder Turboladerdrehzahl, die Einspritzmenge und der Einspritzbeginn der "Boost-Injection" eben auch bei rascher Lastaufschaltung eingeleitet werden kann.

Die ECU erkennt eine Lastaufschaltung anhand der Einspritzmengenzunahme über eine bestimmte Zeit und schaltet die "Boost Injection" entweder zeitgesteuert frei, oder solange bis eine bestimmte Zunahme der Turboladerdrehzahl oder des Ladeluftdrucks erfolgt.

Die Zeitdauer der sogenannte Boost-Injection ist abhängig von der erforderlichen Einspritzmenge.

## Patentansprüche

1. Verfahren zur Optimierung von Arbeits- und Brennverfahren für Dieselmotoren mit Common-Rail-Einspritzung und Turboaufladung, bei dem Kraftstoff zumindest durch eine Haupteinspritzung (HE) und eine der Haupteinspritzung nachfolgenden Nacheinspritzung (BOOST) in jeden Brennraum des Dieselmotors eingespritzt wird und der Beginn und die Menge der Nacheinspritzung (BOOST) in Abhängigkeit des Endes der Haupteinspritzung (HE) sowie von Betriebsparametern des Dieselmotors mittels einer elektrischen Steuereinheit (ECU) und einem darin gespeicherten Kennfeld gesteuert wird, **dadurch gekennzeichnet, dass** die Nacheinspritzung (BOOST) zwischen ca. 50°KW nach Ende der Haupteinspritzung (HE) eingeleitet wird, wobei das Kennfeld den Beginn der Nacheinspritzung (BOOST) mindestens in Abhängigkeit von Hauptpeinspritzmenge und Ladeluftdruck oder Turboladerdrehzahl festlegt, und die Menge der Nacheinspritzung (BOOST) zwischen 20% und 30% der Menge der Haupteinspritzung (HE) einstellt.

2. Verfahren nach einem der vorangehenden Ansprüche, **dadurch gekennzeichnet, dass** mittels der ECU die Nacheinspritzung (BOOST) zeitgesteuert frei geschaltet wird.

3. Verfahren nach Anspruch 1, **dadurch gekennzeichnet, dass** mittels der ECU die Nacheinspritzung in Abhängigkeit einer bestimmten Zunahme der Turboladerdrehzahl oder des Ladeluftdrucks geschaltet wird.

4. Verfahren nach Anspruch 3, **dadurch gekennzeichnet, dass** bei dynamischer Lastaufschaltung entsprechend dem Kennfeld die Nacheinspritzung (BOOST) zur Vermeidung von Russbildung eingeleitet wird.

## Claims

1. A method for optimising operating and combustion processes for diesel engines with common-rail injection and turbocharging, in which fuel is injected at least through a main injection (MI) and a post-injection (BOOST) downstream of the main injection into each combustion chamber of the diesel engine, and the start and the amount of the post-injection (BOOST) is controlled in dependence on the end of the main injection (MI) as well as on operating parameters of the diesel engine by means of an electrical control unit (ECU) and a characteristics field stored therein, **characterised in that** the post-injection (BOOST) is initiated between ca. 50° KW [crankshaft] after the end of the main injection (MI), wherein the characteristics field determines the start of the post-injection (BOOST) at least in dependence on the main injection amount and charging air pressure or turbocharger rotational speed, and adjusts the amount of the post-injection (BOOST) to between 20% and 30% of the amount of the main injection (MI).

2. A method according to claim 1, **characterised in that** the post-injection (BOOST) is freely switched in a time-controlled manner by means of the ECU.

3. A method according to claim 1, **characterised in that** the post-injection is switched by means of the ECU depending on a specific increase in the turbocharger rotational speed or charging air pressure.

4. A method according to claim 3, **characterised in that** with dynamic load switching the post-injection (BOOST) is initiated corresponding to the characteristics field in order to avoid formation of soot.

## Revendications

1. Procédé d'optimisation du processus de fonctionnement et de combustion de moteurs Diesel à injection par rampe commune et charge par turbocompresseur selon lequel le carburant est injecté dans chaque chambre de combustion du moteur Diesel par une injection principale (HE) et une post-injection (BOOST) après l'injection principale, le début et la quantité de la post-injection (BOOST) étant commandés en fonction de la fin de l'injection principale (HE) et des paramètres de fonctionnement du moteur Diesel, par une unité de commande électrique (ECU) et un champ de caractéristiques mémorisé dans celle-ci,
**caractérisé en ce que**
la post-injection (BOOST) est faite entre environ 50° d'angle de vilebrequin KW et après la fin de l'injection principale (HE),
le champ de caractéristiques fixant le début de la post-injection (BOOST) au moins en fonction de la quantité principale d'injection et de la pression d'air d'alimentation ou de la vitesse de rotation du turbocompresseur et la quantité de la post-injection (BOOST) se règle entre 20 % et 30 % de la quantité de l'injection principale (HE).

2. Procédé selon la revendication précédente,
**caractérisé en ce que**
l'unité ECU libère la commande de la post-injection (BOOST).

3. Procédé selon la revendication 1,
**caractérisé en ce que**
l'unité ECU commande la post-injection en fonction d'une augmentation déterminée de la vitesse de rotation du turbocompresseur ou de la pression d'air de charge.

4. Procédé selon la revendication 3,
**caractérisé en ce que**
dans le cas d'une application dynamique de la charge correspondant au champ de caractéristiques, on lance la post-injection (BOOST) pour éviter le développement de noir de fumée.
